# EUROPÄISCHE PATENTANMELDUNG

(11) **EP 3 251 924 A1**
(43) Veröffentlichungstag der Anmeldung: **06.12.2017**
(21) Anmeldenummer: 17160459.8
(22) Anmeldetag: 13.03.2017
(51) Int. Cl.: B62J 6/02, B60Q 1/12

(54) **BELEUCHTUNGSVORRICHTUNG FÜR ZWEIRÄDER**

(30) Priorität: 02.06.2016 DE 102016209660
(71) Anmelder: Benchmark Drives GmbH&Co. KG, 65719 Hofheim (DE)
(72) Erfinder: Rink, Klaus, 63517 Rodenbach (DE); Fernkorn, Georg, 37351 Dingelstädt (DE)
(74) Vertreter: Kilsch, Armin Ralph

(57) **Zusammenfassung**

Beleuchtungsvorrichtung für Zweiräder, bei der die zur Ausleuchtung des Fahrweges vorgesehenen Beleuchtungseinrichtungen, mindestens aber der vordere Scheinwerfer, zur Ausleuchtung von Kurven und/oder seitlich vor dem Fahrzeug liegenden Bereichen ausgebildet sind, wobei die Beleuchtungsvorrichtung eine mit einem Beschleunigungssensor versehene und dessen Signale verarbeitende Steuerungseinrichtung aufweist, welche abhängig von der durch den Beschleunigungssensor detektierten Lage und den Bewegungen des Zweirades eine Kurven- oder Schräglage erkennt und über Steuersignale die Beleuchtungseinrichtungen zur Ausleuchtung der Kurve anpasst und/oder einschaltet

## Beschreibung

Die Erfindung betrifft eine Beleuchtungsvorrichtung für Zweiräder, insbesondere muskelbetriebene Fahrräder oder Pedelecs, bei der die zur Ausleuchtung des Fahrweges vorgesehenen Beleuchtungseinrichtungen, mindestens aber der vordere Scheinwerfer, zur Ausleuchtung von Kurven und/oder seitlich vor dem Fahrzeug liegenden Bereichen ausgebildet sind.

Solche Beleuchtungsvorrichtungen sind seit langem bekannt. So offenbart die DE PS 823988 eine Beleuchtung für ein Zweirad, bei dem der vordere Strahler über mit der Lenkstange gekoppelte Hebel entsprechend der Lenkbewegung schwenkbar ist und somit ein Ausleuchten von Kurvenbereichen ermöglicht.

Die DE PS 808 027 offenbart ebenfalls eine mechanisch angetriebene KurvenSchwenklampe für ein Fahrrad, bei dem der Verschwenkwinkel größer ist als der Lenkwinkel. Durch diese Kurvenschwenklampe wird es dem Fahrer ermöglicht, schon beim geringen Einschwenken der Lenkstange die begonnene Kurve vorzeitig zu beleuchten und sie sicherer nach irgendwelchen Hindernissen zu übersehen.

Der konstruktive Aufwand, die genaue Einstellung und die Instandhaltung sind bei diesen mechanischen Systemen allerdings recht hoch.

Die US 2015/0314823 A1 zeigt eine Beleuchtungseinrichtung für ein Zweirad/Fahrrad, bei dem über einen Beschleunigungssensor ein Bremsvorgang detektiert wird und abhängig davon das Bremslicht des Zweirades so betrieben wird, dass die Stärke des Bremsvorganges erkennbar ist anhand der Anzahl oder der Farbe der Bremslicht-Lampen..

Für die Erfindung bestand die Aufgabe, eine Beleuchtungsvorrichtung bereitzustellen, mit deren Hilfe eine verbesserte Ausleuchtung des Fahrweges bei Kurvenfahrten erreicht wird, die nahezu wartungsfrei und sicher betrieben werden kann und zudem einfach aufgebaut ist und in moderne Fahrzeugführungssysteme integriert werden kann.. Gelöst wird diese Aufgabe durch die Merkmale des Hauptanspruchs. Weitere vorteilhafte Ausbildungen sind in den Unteransprüchen offenbart.

Dabei weist die Beleuchtungsvorrichtung eine mit einem Beschleunigungssensor versehene und dessen Signale verarbeitende Steuerungseinrichtung auf, welche abhängig von der durch den Beschleunigungssensor detektierten Lage und den Bewegungen des Zweirades eine Kurven- oder Schräglage erkennt und über Steuersignale die Beleuchtungseinrichtungen zur Ausleuchtung der Kurve anpasst und/oder einschaltet.

Durch die erfindungsgemäße Vorrichtung wird das Sichtfeld von Zweiradfahrern, insbesondere Fahrradfahrern durch verbesserte Ausleuchtung optimiert und erlaubt ein sicheres Fahren auch bei Dunkelheit. Dies wird insbesondere dann wichtig, wenn Fahrräder zum Beispiel mit elektrischer Unterstützung und höherer Dauergeschwindigkeit fahren, wie sie bei den heutigen E-Bikes durchaus üblich ist.

Eine vorteilhafte Weiterbildung besteht darin, dass die Beleuchtungseinrichtungen zur Ausleuchtung der Kurve dadurch angepasst werden, dass die Beleuchtungseinrichtungen oder ihnen zugeordnete Reflektoren verschwenkt werden. Damit ergibt sich eine sehr einfache Möglichkeit zur Ausleuchtung des Fahrweges, bei der es keinerlei zusätzlicher Leuchten bedarf.

Eine weitere vorteilhafte Ausbildung besteht darin, dass die Beleuchtungseinrichtungen zusätzlich Leuchtmittel aufweisen, insbesondere LED-Leuchten, die zur Ausleuchtung der Kurve eingeschaltet werden. Bei leuchten, deren Stromverbrauch sehr niedrig ist, ist dies ebenfalls eine sehr einfache Ausbildung der erfindungsgemäßen Vorrichtung, da ihr keine weiteren mechanischen Teile erforderlich sind. Auch kann diese Beleuchtung entsprechend der Sensorinformationen leicht in der Lichtstärke der Leuchtmittel angepasst werden. Ebenso lässt sich eine Blendwirkung für andere Verkehrsteilnehmer reduzieren.

Eine weitere vorteilhafte Ausbildung besteht darin, dass die Steuerungseinrichtung mit dem Beschleunigungssensor in einem die Rückleuchte enthaltenden Gehäuse angeordnet ist, welches nahe dem Fahrzeugschwerpunkt angebracht ist, vorzugsweise unter dem oder am Sattel des Zweirades. Zum einen ist dann der Beschleunigungssensor nahe des Schwerpunkts angeordnet und zum anderen wird hierdurch eine hohe Integration der Bauteile erreicht. Ein Nachrüsten fällt damit besonders leicht.

Neben der üblicherweise an einem Fahrrad vorhandenen Übertragung von Energie oder Signalen durch Kabel besteht eine weitere vorteilhafte Ausbildung darin, dass die Übertragung der Steuersignale an die Beleuchtungseinrichtungen bzw. deren Aktoren oder Schalter kabellos durch Funksignale erfolgt, z.B. über Bluetooth, WiFi, ITS-G5 etc. Auch dies dient der einfachen Nachrüstung und der Bereitstellung eines sehr wenig komplexen Systems unter Nutzung bereits bestehende Kommunikationsstandards.

Eine weitere vorteilhafte Ausbildung besteht darin, dass die Übertragung der Steuersignale an die Beleuchtungseinrichtungen unter Einbindung eines als Übertragungsschnittstelle dienenden elektronischen Gerätes erfolgt, vorzugweise über ein drahtlos arbeitendes Telekommunikationsgerät (Smartphone). Damit könnten nicht nur Fahrsituationen und Sensordaten eventuell auf Speichern des Telekommunikationsgesetzes abgelegt und später ausgewertet werden, sondern auch für Navigation, Beschleunigungsmessungen etc. aufgenommen werden und ggf. kabellos, schnell und sicher übertragen werden.

Auch die Integration der Beleuchtungsvorrichtung in andere Sicherheitssysteme und in Kombination mit anderen Funktionalitäten ist möglich. So könnten Sendeeinheiten vorgesehen werden" welche Position, Geschwindigkeit und Richtung des Zweirads aussenden und somit im Fall einer unsichtbaren Gefahr, etwa eines verdeckten, sich annähernden Fahrzeugs, eine Warnung Fahrer erzeugen.

## Patentansprüche

1. Beleuchtungsvorrichtung für Zweiräder, insbesondere muskelbetriebene Fahrräder oder Pedelecs, bei der die zur Ausleuchtung des Fahrweges vorgesehenen Beleuchtungseinrichtungen, mindestens aber der vordere Scheinwerfer, zur Ausleuchtung von Kurven und/oder seitlich vor dem Fahrzeug liegenden Bereichen ausgebildet sind, **dadurch gekennzeichnet, dass** die Beleuchtungsvorrichtung eine mit einem Beschleunigungssensor versehene und dessen Signale verarbeitende Steuerungseinrichtung aufweist, welche abhängig von der durch den Beschleunigungssensor detektierten Lage und den Bewegungen des Zweirades eine Kurven- oder Schräglage erkennt und über Steuersignale die Beleuchtungseinrichtungen zur Ausleuchtung der Kurve anpasst und/oder einschaltet.

2. Beleuchtungsvorrichtung nach Anspruch 1, bei der die Beleuchtungseinrichtungen zur Ausleuchtung der Kurve dadurch angepasst werden, dass die Beleuchtungseinrichtungen oder ihnen zugeordnete Reflektoren verschwenkt werden.

3. Beleuchtungsvorrichtung nach Anspruch 1 oder 2, bei der die Beleuchtungseinrichtungen zusätzlich Leuchtmittel aufweisen, insbesondere LED-Leuchten, die zur Ausleuchtung der Kurve eingeschaltet werden.

4. Beleuchtungsvorrichtung nach einem der Ansprüche 1 bis 3, bei der die Steuerungseinrichtung mit dem Beschleunigungssensor in einem die Rückleuchte enthaltenden Gehäuse angeordnet ist, welches nahe dem Fahrzeugschwerpunkt angebracht ist, vorzugsweise unter dem oder am Sattel des Zweirades.

5. Beleuchtungsvorrichtung nach einem der Ansprüche 1 bis 4, bei der die Übertragung der Steuersignale an die Beleuchtungseinrichtungen kabellos durch Funksignale erfolgt.

6. Beleuchtungsvorrichtung nach Anspruch 5, bei der die Übertragung der Steuersignale an die Beleuchtungseinrichtungen unter Einbindung eines als Übertragungsschnittstelle dienenden elektronischen Gerätes erfolgt, vorzugweise über ein drahtlos arbeitendes Telekommunikationsgerät.
